# EUROPEAN PATENT APPLICATION

(11) **EP 2 008 611 A1**
(43) Date of publication of application: **31.12.2008**
(21) Application number: 08252175.8
(22) Date of filing: 25.06.2008
(51) Int. Cl.: A61C 7/02, A61C 7/28

(54) **Orthodontic hand tools for use with a self-ligating orthodontic bracket, methods for using such orthodontic hand tools, self-ligating orthodontic brackets, and orthodontic bracket systems**

(30) Priority: 28.06.2007 US 946853 P; 10.01.2008 US 20245 P
(71) Applicant: ORMCO CORPORATION, Orange, CA 92867 (US)
(72) Inventor: Oda, Todd I., Torrance, CA 90504 (US); Sheikh, Hamid, Chino, CA 91710 (US); Albano, Peter J., Upland, CA 91784 (US); Wood, William W., Sonora, CA 95370 (US)
(74) Representative: Findlay, Alice Rosemary

(57) **Abstract**

Orthodontic hand tools and methods for using the orthodontic hand tools in conjunction with self-ligating orthodontic brackets, as well as self-ligating orthodontic brackets and bracket systems. The orthodontic bracket (20, 20a, 102) includes a contact point (40, 40a, 126) on its bracket body (21) and a contact point (27, 27a, 124) on a movable member (25) used to self-ligate an archwire (24) in an archwire slot (23) defined in the bracket body (21). The contact points are arranged such that different portions of a tip (12a, 12b, 76, 108, 138) on the hand tool (10, 10a, 10b, 10c, 70, 100, 130) can be placed in a contacting relationship with the contact points and used to place the movable member (25) in an open position. When the tip (12a, 12b, 76, 108, 138) is used, the tip (12a, 12b, 76, 108, 138) applies a force to the first and second contact points effective to move the movable member (25) relative to the bracket body (21) with negligible force transferred from the tip (12a, 12b, 76, 108, 138) to the tooth.

## Description

The invention relates generally to orthodontics and, more particularly, to hand tools for use with self-ligating orthodontic brackets, methods for using such orthodontic hand tools in conjunction with self-ligating orthodontic brackets, self-ligating orthodontic brackets, and orthodontic bracket systems including orthodontic hand tools and self-ligating orthodontic brackets.

Orthodontic brackets represent principal components of all corrective orthodontic treatments devoted to improving a patient's occlusion. In conventional orthodontic treatments used for cosmetic enhancement of teeth, brackets are affixed to the patient's teeth and an archwire is engaged into a slot of each bracket. The archwire applies corrective forces that coerce the teeth to move into correct positions. The archwire forms a track to guide movement of the brackets and the associated teeth to desired positions for correct occlusion.

Self-ligating orthodontic brackets have been developed that eliminate the need for ligatures by relying on a movable member, such as a slide, a cover, or a spring clip, for capturing the archwire within the bracket's archwire slot. Self-ligating orthodontic brackets provide greater patient comfort, shorter treatment time, reduced patient chair time, and more precise control of tooth translation. Traditional ligatures (e.g., elastomeric ligatures or metal wires) are also difficult to apply to each individual bracket, which is simplified by self-ligating types of orthodontic brackets. Elastomeric ligatures, which may be susceptible to decay and deformation, may also contribute to poor oral hygiene. Self-ligation also reduces the risks of soft-tissue injury to the patient's mouth arising from the presence of wire ligatures.

Conventionally, doctors use an explorer type tool or a "pen" type opening tool to pull the movable member relative to the bracket body to provide an opened position in which the archwire slot is accessible to remove the archwire. The opening tool applies a force directly to the movable member that initiates movement of the movable member toward the opened position. While resident in the patient's mouth, self-ligating orthodontic brackets are prone to calculus buildup. In particular, depending upon the amount of calculus buildup and its location, it may become difficult to initiate movement of a closed movable member relative to the bracket toward the opened position using a conventional opening tool. Specifically, the calculus buildup may require the application of a relatively large force to initiate movement of the movable member. This force is transferred from the bracket to the tooth of the patient, which results in patient discomfort. Consequently, the doctor may have to resort to replacing the bracket, if the movable member cannot be opened, or to using a plier-type device to force the movable member to the opened position. In either instance, the patient may experience significant discomfort as the unbalanced force is transferred from the bracket to the tooth.

In one aspect of the invention, an orthodontic hand tool is provided for use with a self-ligating orthodontic bracket that includes a bracket body configured to be mounted to a tooth and a movable member. The bracket body includes an archwire slot and a first contact point. The movable member includes a second contact point. The movable member is coupled with the bracket body for movement relative to the archwire slot between an open position in which the archwire is insertable into the archwire slot and a closed position in which the movable member retains the archwire in the archwire slot. The orthodontic hand tool comprises an elongate shaft and a tip projecting from the elongate shaft. The tip is adapted to be placed in a contacting relationship with the first contact point on the bracket body and in a contacting relationship with the second contact point on the movable member. When the elongate shaft is tilted or rotated relative to the bracket body, the first portion of the tip applies a first force to the first contact point on the bracket body and the second portion of the tip applies a second force to the second contact point on the movable member effective to move the movable member relative to the bracket body.

In another aspect of the invention, an orthodontic hand tool is provided for use in conjunction with a movable member of a self-ligating orthodontic bracket. The orthodontic bracket includes a bracket body and a movable member. The bracket body further includes a labial surface and an archwire slot in the labial surface. The movable member is coupled with the bracket body for movement relative to the bracket body between an open position in which the archwire is insertable into the archwire slot and a closed position in which the movable member retains the archwire in the archwire slot. The orthodontic hand tool comprises an elongate shaft having a first end and a second end. A first tip, which projects from the first end of the elongate shaft, is adapted to move the movable member relative to the bracket body from the closed position toward the open position. A second tip projects from the second end of the elongate shaft. The second tip is adapted to engage the archwire and to apply a force to the movable member effective to hold the archwire in the archwire slot and to concurrently move the movable member relative to the bracket body from the open position toward the closed position.

In another aspect of the invention, an orthodontic hand tool is provided for use in conjunction with a self-ligating orthodontic bracket. The orthodontic hand tool includes an elongate shaft extending between a first end and a second end. A first member is disposed on the first end of the shaft and a second member is disposed on the second end of the shaft. The first member is structurally configured to perform a first function associated with the self-ligating bracket. The second member is structurally configured to perform a second function different than the first function. The second function performed by the second member, while relating to a function in the field of dentistry or orthodontics, may or may be associated with the operation of the self-ligating bracket.

In another aspect of the invention, a method is provided for using an orthodontic hand tool in conjunction with a self-ligating orthodontic bracket that includes a bracket body configured to be mounted to a tooth and a movable member. The bracket body includes an archwire slot. The movable member is coupled with the bracket body for movement relative to the archwire slot between an open position in which the archwire is insertable into the archwire slot and a closed position in which the movable member retains the archwire in the archwire slot. The method comprises placing a first portion of a tip of the orthodontic hand tool into a contacting relationship with a first contact point on the bracket body and placing a second portion of the tip of the orthodontic hand tool into a contacting relationship with a second contact point on the movable member. The method further comprises moving the movable member relative to the archwire slot by applying a first force to the first contact point with the first portion of the tip and applying a second force to the second contact point with the second portion of the tip.

In yet another aspect of the invention, an orthodontic bracket is provided for use with an orthodontic hand tool having a tip. The orthodontic bracket is adapted to couple an archwire with a tooth. The orthodontic bracket comprises a bracket body configured to be mounted to a tooth. The bracket body includes an archwire slot and a first contact point. A movable member is coupled with the bracket body for movement relative to the archwire slot between an open position in which the archwire is insertable into the archwire slot and a closed position in which the movable member retains the archwire in the archwire slot. The movable member includes a second contact point. The first contact point is positioned on the bracket body such that the tip of the orthodontic hand tool can be placed in a contacting relationship with the first contact point on the bracket body and a contacting relationship with the second contact point on the movable member.

In yet another aspect of the invention, an orthodontic bracket system is provided for use in coupling an archwire with a tooth. The orthodontic bracket system comprises an orthodontic hand tool having an elongate shaft and a tip projecting from the elongate shaft. The orthodontic bracket system further comprises an orthodontic bracket configured to be mounted to the tooth. The orthodontic bracket includes a bracket body with an archwire slot and a movable member coupled with the bracket body for movement relative to the archwire slot between an open position in which the archwire is insertable into the archwire slot and a closed position in which the movable member retains the archwire in the archwire slot. The bracket body includes a first contact point and the movable member including a second contact point. The first contact point is positioned on the bracket body such that the tip of the orthodontic hand tool can be placed in a contacting relationship with the first contact point on the bracket body and a contacting relationship with the second contact point on the movable member. When the elongate shaft is tilted or rotated relative to the bracket body, the first portion of the tip applies a first force to the first contact point on the bracket body and the second portion of the tip applies a second force to the second contact point on the movable member effective to move the movable member relative to the bracket body.

The invention, at least in the preferred embodiments, provides an orthodontic hand tool, as well as a self-ligating orthodontic bracket, characterized by respective constructions that cooperate to minimize the force transmitted to the tooth of the patient when opening the bracket and overcome these and other deficiencies of conventional orthodontic hand tools and self-ligating orthodontic brackets.

Because of the construction of the orthodontic hand tool and/or the self-ligating bracket, a doctor can apply significant leverage in opening the movable member with the orthodontic hand tool because equal and opposite reactionary forces act on the movable member and bracket body of the self-ligating bracket. This reduces patient discomfort when the movable member is opened to access the archwire slot because the amount of force transferred to the patient's tooth is minimized or negligible.

The invention will now be further described by way of example with reference to the accompanying drawings, in which:

FIG. 1 is a perspective view of an orthodontic hand tool in accordance with an embodiment of the invention.

FIG. 2 is an enlarged view of an encircled portion 2 of FIG. 1.

FIG. 2A is an enlarged side view of the orthodontic hand tool of FIG. 2.

FIG. 2B is an enlarged end view of the orthodontic hand tool of FIG. 2.

FIG. 3 is a perspective view of an orthodontic bracket constructed in accordance with an embodiment of the invention.

FIG. 3A is an enlarged perspective view of a portion of FIG. 3 with the movable member removed from the bracket body for clarity of illustration.

FIG. 4 is another perspective view of the orthodontic bracket of FIGS. 3 and 3A.

FIGS. 5 and 6 are perspective views of the orthodontic bracket of FIGS. 3, 3A, and 4 and the orthodontic hand tool of FIGS. 1, 2, 2A, and 2B illustrating a process in which the orthodontic hand tool is rotated relative to the bracket body of the orthodontic bracket to move the movable member in accordance with an embodiment of the invention.

FIG. 7 is an elevational view of the orthodontic bracket of FIGS. 3, 3A, and 4 and the orthodontic hand tool of FIGS. 1, 2, 2A, and 2B illustrating a process in which the orthodontic hand tool is tilted relative to the bracket body to move the movable member in accordance with an alternative embodiment.

FIG. 8 is a perspective view of an orthodontic hand tool constructed in accordance with an alternative embodiment of the invention.

FIG. 8A is an enlarged view of an encircled portion 8A of FIG. 8.

FIG. 8B is an enlarged end view of the orthodontic hand tool of FIG. 8A.

FIG. 9 is an enlarged perspective view similar to FIG. 8A of an orthodontic hand tool constructed in accordance with an alternative embodiment of the invention.

FIG. 10 is a perspective view of the orthodontic bracket illustrating an alternative process of opening the slide using the orthodontic hand tool of FIG. 9.

FIG. 10A is a cross-sectional view taken generally along line 10A-10A in FIG. 10.

FIG. 11 is a partial perspective view of an orthodontic hand tool constructed in accordance with an alternative embodiment of the invention.

FIG. 11A is another partial perspective view of the orthodontic hand tool of FIG. 11.

FIG. 12 is a partial perspective view of an orthodontic hand tool constructed in accordance with an alternative embodiment of the invention in which a tip of the tool tapers to a chisel-type point.

FIG. 13 is an end view of the orthodontic hand tool of FIG. 12.

FIG. 14 is a partial perspective view illustrating use of the orthodontic hand tool of FIGS. 12 and 13 with an orthodontic bracket.

FIG. 15 is a partial perspective view of an orthodontic hand tool and an orthodontic bracket constructed in accordance with an alternative embodiment of the invention in which a tip of the tool includes a pair of spaced-apart prongs and the orthodontic bracket includes a recess in the bracket body and a recess in the movable member used to ligate an archwire in the archwire slot.

FIG. 16 is a partial perspective view similar to FIG. 15.

FIGS. 17A and 17B are top views of the orthodontic bracket with only the prongs of the orthodontic hand tool visible for clarity of illustration and in which the use of the orthodontic hand tool to open the moveable member is illustrated.

FIG. 18 is a partial perspective view of an orthodontic hand tool similar to the hand tool of FIGS. 12-14 and constructed in accordance with an alternative embodiment of the invention.

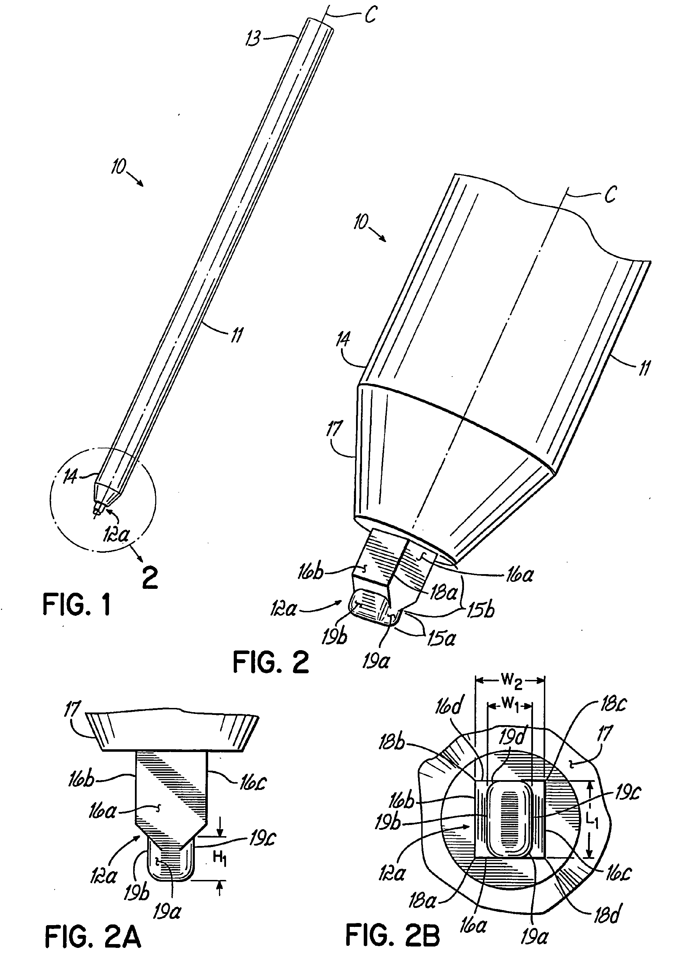

With reference to FIGS. 1 and 2, an orthodontic hand tool, generally indicated by reference numeral 10, for use in corrective orthodontic treatments generally includes an elongate shaft 11 extending along a longitudinal axis, C, between a proximal end 13 and a distal end 14. The orthodontic hand tool 10 may be constructed of conventional materials familiar to a person having ordinary skill in the art, such as a stainless steel, and may be selected such that tool 10 can be thermally sterilized for re-use on another patient. The elongate shaft 11 may be grasped and manipulated to move either of the ends 13, 14 relative to the patient's tooth.

As best shown in FIGS. 2, 2A, and 2B, a tip 12a projects from the distal end 14 of the tool 10. The tip 12a has sidewalls 16a, 16b, 16c, and 16d and sidewalls 19a, 19b, 19c, and 19d arranged in adjacent pairs to meet at a plurality of corners 18a, 18b, 18c, and 18d. The tip 12a has first section 15a, which is defined by sidewalls 16a-d, with a cross-sectional profile of width W₁ and length L₁ that is smaller in area than the cross-sectional profile of the distal end 14 of the elongate shaft 11. The tip 12a includes a second section 15b between the first section 15a and the distal end 14 of the elongate shaft 11, the second section 15b, which is defined by sidewalls 19a-d, having a cross-sectional profile of width W₂ and length L₁ that is larger in area than the cross-sectional profile of the first section 15a. The cross-sectional profile of each of the two sections 15a, 15b is substantially rectangular. The tip 12a is connected to the distal end 14 of the elongate shaft 11 with a transition section 17. The first section 15a projects from the second section 15b by a height or distance of H₁. In specific embodiments, the distance, H₁, may range from about 0.5 mm to about 2.0 mm.

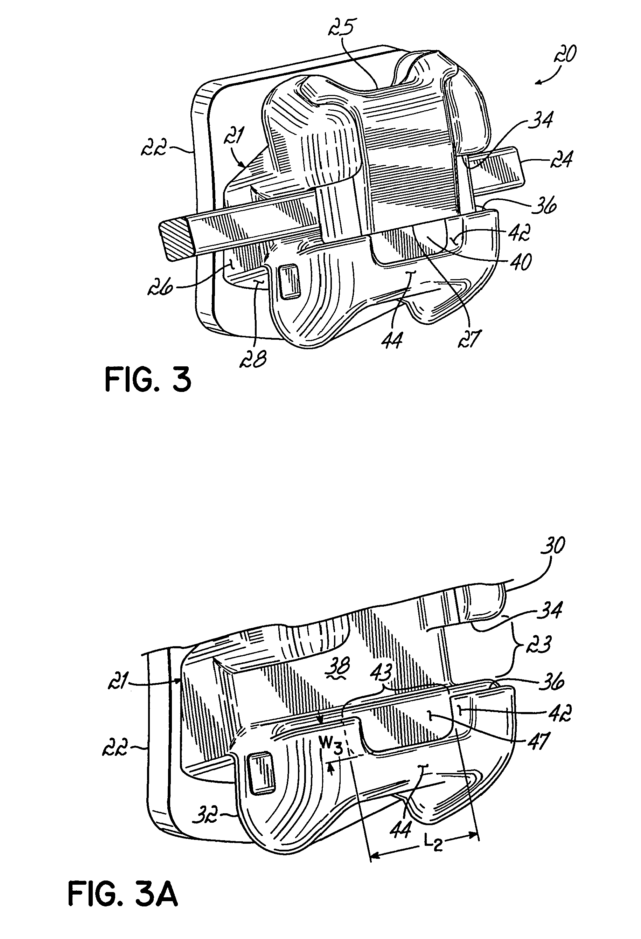

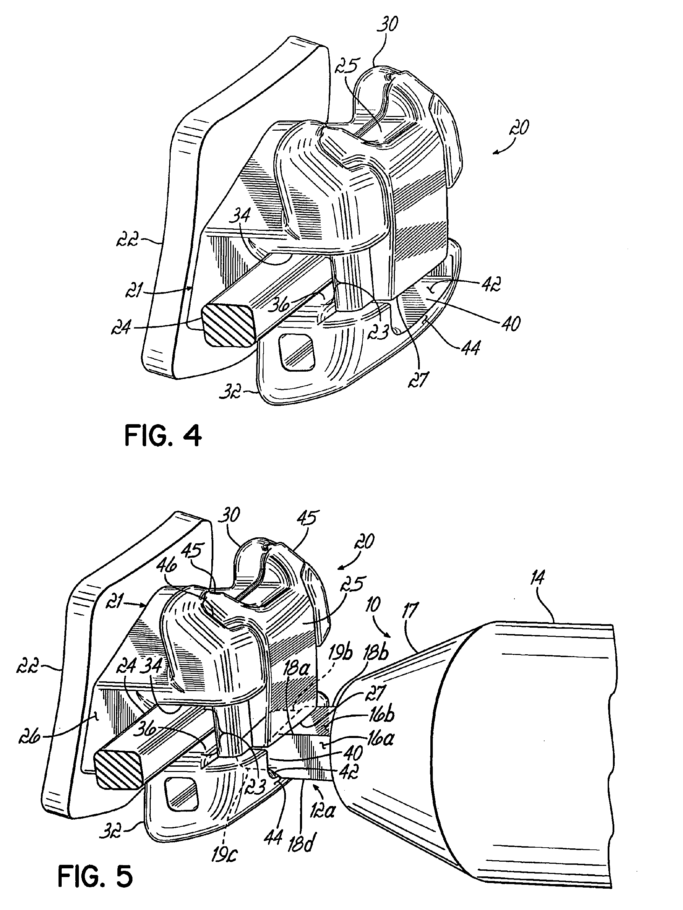

With reference to FIGS. 3, 3A, and 4, an orthodontic bracket, generally indicated by reference numeral 20, for use in corrective orthodontic treatments generally includes a bracket body 21, a base 22 for mounting the bracket body 21 to a tooth (not shown), an archwire slot 23 for receiving an archwire 24, and a movable member 25. The movable member 25 includes arms 45 (FIG. 5) that are slidably movable in guides 46 (FIG. 5) formed in the bracket body 21. The movable member 25 is movable between a closed position, as shown in FIG. 3, in which the archwire 24 is retained in the archwire slot 23 and an open position in which the archwire 24 is insertable into the archwire slot 23. In the open position, the movable member 25 does not overlie the archwire slot 23 and the archwire slot 23 is accessible for insertion and removal of the archwire 24. In the closed position (FIG. 3), the movable member 25 overlies the archwire slot 23, which captures the archwire 24 within the archwire slot 23.

In alternative embodiments, the movable member 25 may have a different construction, such as a locking member, a latch, a hinged latch, a ligation cover, a shutter member, a retaining clip, a movable cover, a clip, a spring clip, or any other type of retention device recognized by a person having ordinary skill in the art.

If orthodontic bracket 20 is mounted to a tooth in the maxilla, the movable member 25 may open in the occlusal direction. If orthodontic bracket 20 is mounted to a tooth in the mandible, the movable member 25 may open in the gingival direction. However, the movable member 25 for different brackets 20 applied to either jaw or arch may open in any combination of directions. When attached to a patient's tooth, the orientation of the bracket 20 may differ from the orientation shown in the drawings as understood by a person having ordinary skill in the art.

The bracket body 21, base 22, and movable member 25 are constructed using known fabrication methods from conventional materials, including but not limited to a metal like titanium or a ceramic. The bracket body 21, base 22, and movable member 25 may be constructed of different materials or any combination of conventional materials familiar to a person having ordinary skill in the art.

The base 22 is configured to be adhesive bonded to a buccolabial surface of a tooth (not shown) in any conventional manner such as, for example, with an appropriate orthodontic cement or glue. The base 22 may have a contoured profile that corresponds to the curved contour of the patient's tooth surface to which the base 22 is bonded and may carry optional structure (not shown), such as a bond pad, for enhancing the strength of the adhesive bond with the patient's tooth surface.

The bracket body 21 includes a pair of sidewalls 26 (one not shown) that are substantially parallel to each other and that are oriented generally in gingival-occlusal planes when the base 22 is secured to the tooth. The bracket body 21 also includes sidewalls 28. Sidewalls 26, 28 converge to define bracket body corners, which may be chamfered or curved to facilitate smooth junctions.

The bracket body 21 includes an integral body extension 30 that projects outwardly beyond sidewall 28 in either an occlusal or gingival direction when the base 22 is secured to the tooth. The bracket body 21 includes another body extension 32 that projects beyond the opposite sidewall 28 in the opposite direction to the body extension 30. The body extensions 30, 32 may define tie wings providing attachment points to, for example, apply torsional forces to the tooth to which the orthodontic bracket 20 is attached or if the tooth is severely malpositioned during the initial treatment stages.

With continued reference to FIGS. 3, 3A, and 4, the archwire slot 23 is bounded by two side surfaces 34, 36 and a base surface 38 that penetrate through the pair of sidewalls 26 to define a channel that extends across the bracket 20 generally in the mesial-distal direction. The base surface 38 joins the side surfaces 34, 36. The separation between the side surfaces 34, 36 determines the maximum physical dimensions of an archwire 24 that can be inserted into the archwire slot 23. The archwire slot 23 defines a channel that receives the archwire 24 that, when a dental treatment is in progress, transfers a corrective force from the archwire 24 to the bracket 20. The corrective force coerces the tooth to which the bracket 20 is secured to move relative to nearby teeth within the patient's mouth. The channel defined by the archwire slot 23 opens toward either the cheek or lips contingent upon the location within the upper or lower jaw of the tooth to which the bracket 20 is attached. When the movable member 25 is in the open position, the archwire slot 23 is accessible for inserting and removing the archwire 24. When the movable member 25 is in the closed position (FIG. 3), the archwire 24 is secured in the archwire slot 23 to ligate the archwire 24 to the bracket 20.

The bracket body 21 includes a contact point, which in the representative is constituted by a receptacle or recess 40 formed on one side of the archwire slot 23. The recess 40 has an opening that faces in the labial direction. In the embodiment shown, the recess 40 is a blind opening that is bounded by a base surface 47 and a sidewall 42 with an opening 43 that confronts a portion 27 of the movable member 25. The sidewall 42 intersects the labial surface 44 and extends into the bracket body 21 from the labial surface 44 to the base surface 47. The recess 40 is positioned in the labial surface 44 such that the tip 12a can contact the sidewall 42 and the movable member 25 when the tip 12a is inserted into the recess 40 and the movable member 25 is in the closed position.

The recess 40 has a cross sectional profile defined by dimensions W₃ and L₂. The dimensions and shape of the recess 40 are selected such that the tip 12a can be inserted into the recess 40 and moved for moving the movable member 25 from the closed position toward the open position. In this regard, the dimension W₃ of the recess 40 may be greater than the dimension W₁ of the first section 15a of the tip 12a and dimension L₂ of the recess 40 may be greater than dimension L₁ of the first section 15a. The recess 40 is recessed into the labial surface 44 of the bracket body 21 by a depth or dimension, which may be between about 0.3 mm and about 3.0 mm. When viewed in the labial direction, the recess 40 has a cross-sectional profile that is generally rectangular. The dimension L₂ of the recess 40 and dimension L₁ of the first section 15a may selected such that, when the tip 12a is rotated relative to the recess 40 in the bracket body 21 by a given angle, the movable member 25 is moved to the open position. For example, the dimensions L₂ and L₁ may be matched such that tip 12a may be rotated relative to the recess 40 by, for example, about 90° to move the movable member 25 from the closed position to the open position without attempting to force the movable member 25 to travel beyond the normal open position in which the archwire 24 is exposed. By constraining the range of motion for the movable member 25, a load is not imposed on the bracket's spring pin (not shown). The spring pin (not shown) in the bracket 20 represents a hard stop for the movable member 25 during the opening procedure. An appropriate selection of the dimension L₁ places control limits of the slide opening procedure on the tool 10 and not on the spring pin.

Recess 40 is a concavity in the representative embodiment that is recessed into the labial surface 44 such that the sidewall 42 and base surface 47 of the recess 40 are non-coplanar with the adjacent portion of the labial surface 44. The lack of co-planarity permits the tip 12a to be engaged with the recess 40 for the application of force to the movable member 25 and bracket body 21 used to move the movable member 25 relative to the bracket body 21 without transferring substantial force to the patient's tooth. In alternative embodiments, the recess 40 may be replaced by a different type of contact point, such as a flat or curved tab, that projects from the nearby portion of the labial surface 44 of the bracket body 21. The tip 12a of orthodontic hand tool 10 contacts the projecting feature for the application of force to the contact point on the movable member 25 and to the projecting feature on the bracket body 21 so that the movable member 25, when in its closed position, can be moved relative to the bracket body 21 without transferring substantial force to the patient's tooth. In an alternative embodiment, the recess 40 may be defined in one of the sidewalls 26, 28 of the bracket body 21.

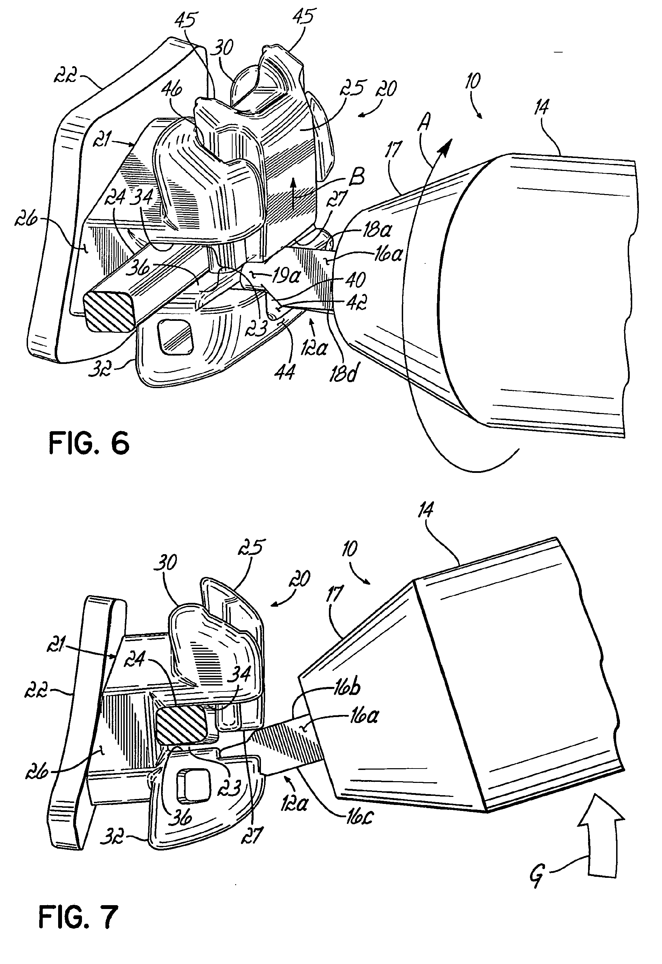

With reference to FIGS. 5 and 6, the tip 12a of the orthodontic hand tool 10 is illustrated in a position inserted into the recess 40. The tip 12a and one or more of the sidewalls 16a-16d and 19a-19d of the orthodontic hand tool 10 may have a contacting relationship with the sidewall 42 that bounds the recess 40 and a contacting relationship with the portion 27 of the movable member 25 through the opening 43 in the sidewall 42 that confronts the portion 27 of the movable member 25. The portion 27 comprises the contact point on the movable member 25. Although the term "contact point" is used for convenience of description herein, a person having ordinary skill in the art will understand that the referenced contact between the tip 12a and portion 27 and between the tip 12a and the portion of the bracket body 21 about recess 40 may occur over a line of contact or across a two-dimensional surface area of contact. The specific contact point or points on at least the movable member 25 may change as the movable member 25 is moved relative to the archwire slot 23 by the operation of the tip 12a.

As shown in FIG. 6, in using orthodontic hand tool 10 to open movable member 25, the orthodontic hand tool 10 is rotated relative to the recess 40 in the direction of arrow A. Once orthodontic hand tool 10 is rotated, the tip 12a and one or more of the sidewalls 16a-16d and 19a-19d of the orthodontic hand tool 10 contact the portion 27 of the movable member 25 through the opening 43 in the sidewall 42, effective to move the movable member 25 from the closed position toward the open position in the direction of arrow B.

As the orthodontic hand tool 10 is rotated, the tip 12a and one or more of the sidewalls 16a-16d and 19a-19d also contact the sidewall 42 bounding the recess 40. Consequently, the bracket body 21 and the movable member 25 share the reactionary forces from tip 12a so that the force transferred to the tooth is minimized, which reduces patient discomfort from the act of opening the movable member 25. In other words, when opening the movable member 25, the tip 12a applies equal and opposite forces to the bracket body 21 via the contacted sidewall 42 and the contacted portion 27 of movable member 25.

As noted above, the movable member 25 includes spaced-apart arms 45. As the movable member 25 is moved toward the open position in the direction of arrow B, the arms 45 of the movable member 25 are retained by respective guides 46 formed in the bracket body 21. The guides 46 constrain the movement of the movable member 25 as the movable member 25 is moved relative to the bracket body 21 between the closed and open positions.

In an alternative embodiment and as shown in FIG. 7, in using orthodontic hand tool 10 to move movable member 25 toward the open position, the orthodontic hand tool 10 is tilted in the direction of arrow G such that the tip 12a and one or more of the sidewalls 16a, 16b, 16c, and 16d of the orthodontic hand tool 10 contact the movable member 25 and the bracket body 21. The tilting action, which transfers reactionary forces to the first and second contacts points on the bracket body 21 within recess 40 and on the movable member 25.

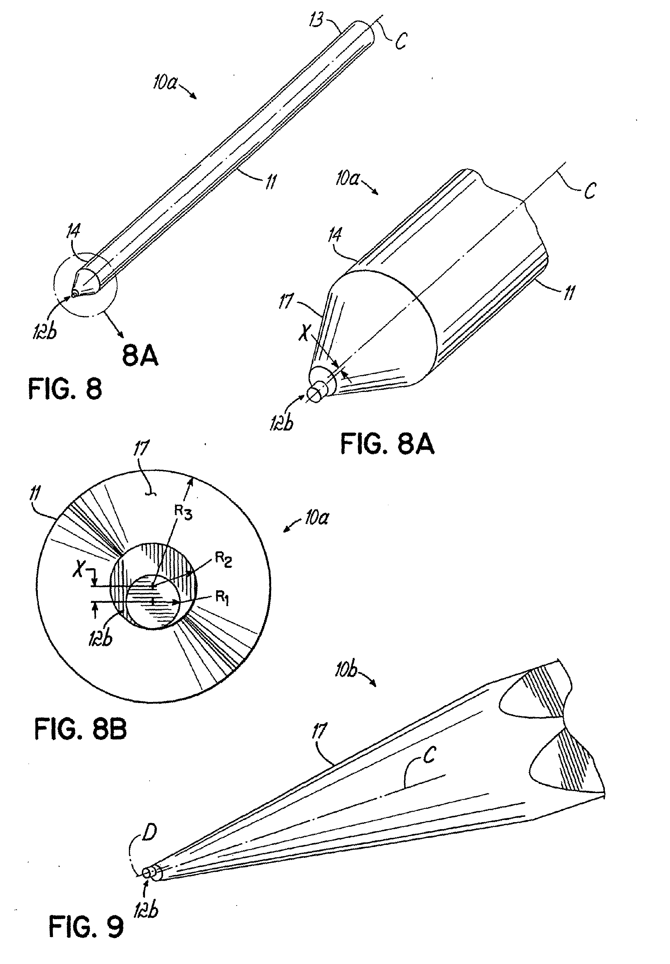

With reference to FIGS. 8, 8A, and 8B in which like reference numerals refer to like features in FIGS. 1-7 and in another embodiment, an orthodontic hand tool 10a includes a tip 12b having a substantially round cross-sectional profile. The tip 12b is provided with an axis of symmetry D that is offset radially from the longitudinal axis C of the elongate shaft 11 by a distance X. The tip 12b projects from the transition section 17 by, for example, between about 0.5 mm and about 2.0 mm.

As best shown in FIG. 8B, the tip 12b is partially defined by radius R1, that is offset radially from the longitudinal axis C of the elongate shaft 11. The transition section 17 has a conical shape and is partially defined by radius R₂, while elongate shaft 11 is partially defined by radius R₃. The transition section 17 is substantially centered about the longitudinal axis C of the elongate shaft 11. Tip 12b participates in the point of contact with the bracket body 21 and the transition section 17 participates in the point of contact with the movable member 25.

With reference to FIG. 9 in which like reference numerals refer to like features in FIGS. 1-8 and in another embodiment, the transition section 17 of an orthodontic hand tool 10b, which is otherwise similar to orthondontic tool 10a, has a conical shape that is substantially centered about the longitudinal axis C of the elongate shaft 11 and tapered in a direction toward the tip 12b. With regard to this embodiment, the tip 12b, which has a cross-sectional profile that is substantially round, may project from the transition section 17 by a distance between about 0.5 mm and about 2.0 mm.

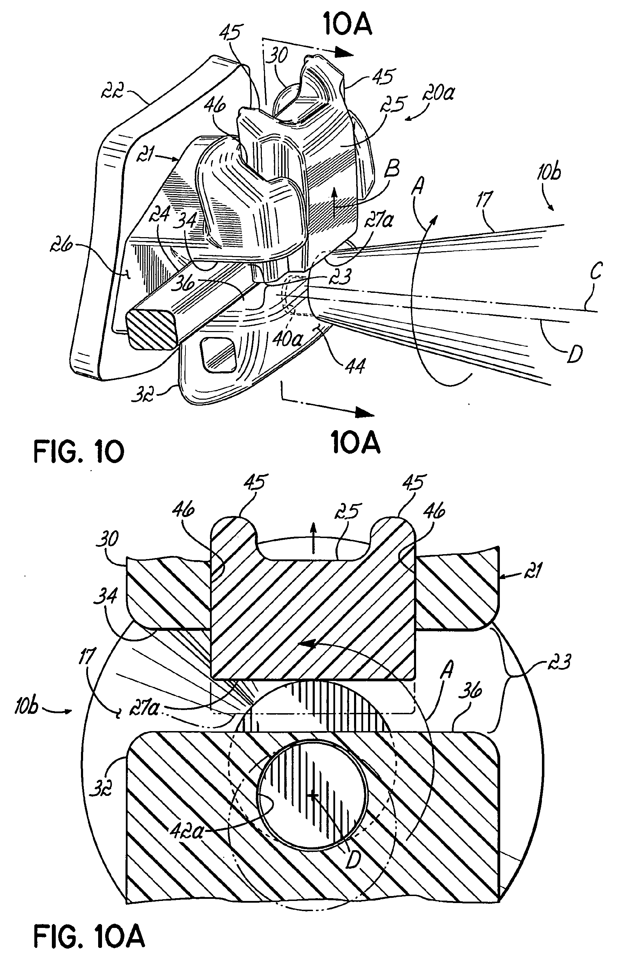

As shown in FIGS. 10 and 10A, an orthodontic bracket 20a, which is otherwise similar to bracket 20 (FIGS. 3-7), is provided with a recess 40a of a round cross-sectional profile that is adapted to receive the tip 12b. The recess 40a may be continuously bounded by a sidewall 42a without an opening that confronts the movable member 25. Due to the offset of the axis of symmetry D of the tip 12b from the longitudinal axis C of the elongate shaft 11, when the orthodontic hand tool 10b is rotated about the longitudinal axis C of the elongate shaft 11 in the direction of arrow A, the transition section 17 contacts a portion 27a of the movable member 25, effective to move the movable member 25 toward the open position in the direction of arrow B. The portion 27a of the movable member 25, which does not need to be contoured as is portion 27 (FIGS. 3, 3A, and 4), may have an edge raised above the labial surface 44 to facilitate the contact between the transition section 17 and the portion 27a of the movable member 25.

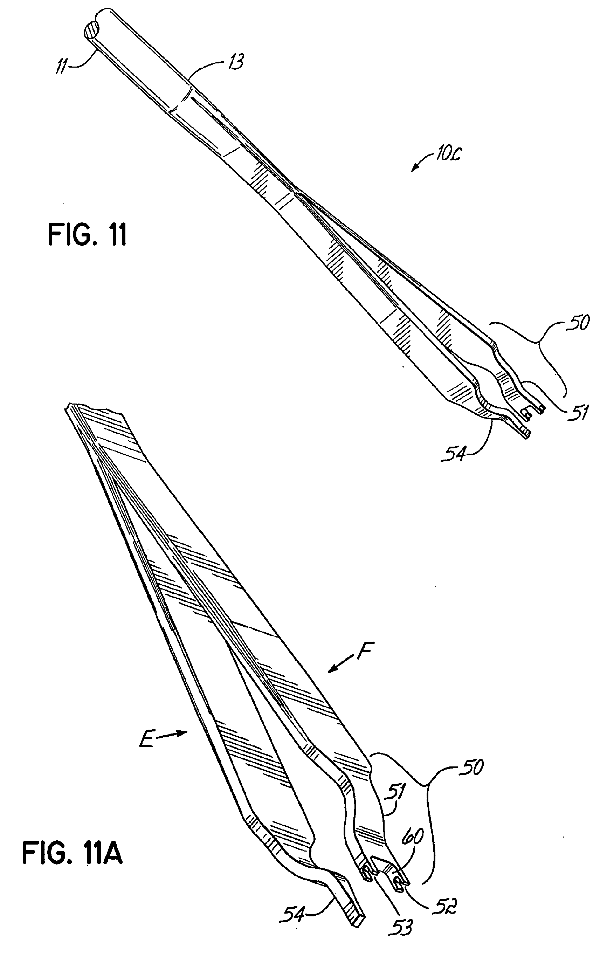

In another alternative embodiment and as shown in FIGS. 11 and 11A in which like reference numerals refer to like features in FIGS. 1-10, a dual-purpose orthodontic hand tool, generally indicated by reference numeral 10c, for use in corrective orthodontic treatments includes a closing mechanism 50 that projects from the proximal end 13 of elongate shaft 11. Although not visible in FIGS. 11, 11A, either tip 12a (FIGS. 1, 2) or, alternatively, tip 12b (FIGS. 8-9) may project from the distal end 14 (FIG. 1) of the elongate shaft 11.

The closing mechanism 50 has a first section 51 with grooves 52 and 53 dimensioned and shaped for engaging the archwire 24 (FIG. 5). The closing mechanism 50 also includes a second section 54 for applying a force to the movable member 25 (FIG. 5). As the grooves 52 and 53 engage the archwire 24, the second section 54 of the closing mechanism 50 can be positioned to contact the movable member 25, as described in more detail below.

The closing mechanism 50 is designed so that the first section 51 and the second section 54 are moveable toward each other under a force applied by hand in the direction shown by arrows E and F to move the movable member 25 from the open position to the closed position. Simultaneously, the archwire 24 is held by the grooves 52 and 53 substantially stationary within the archwire slot 23. The first section 51 and the second section 54 are biased relative to each other such that the spring bias force increases as the first section 51 and the second section 54 approach each another under a hand applied or manual force. A contoured arched space 60 between the grooves 52, 53 is dimensioned and shaped to accommodate a portion of the bracket body 21 that that the grooves 52 and 53 are disposed on opposite sides of (i.e., straddle) the bracket body 21.

In alternative embodiments, either closing mechanism 50 or tip 12a may be replaced by a different type of structure (not shown) commonly used in the fields of orthodontics and dentistry to perform procedures within a patient's mouth. These structures, which are recognized by a person having ordinary skill in the art, may function to probe, measure and hold various pieces of mouth tissue or orthodontic hardware. These structures assist the practitioner in grasping, holding, moving, and replacing various objects within a patient's mouth. Exemplary alternative structures include, but are not limited to, a mirror, a file, an explorer, a scraping tool, a ruler, etc.

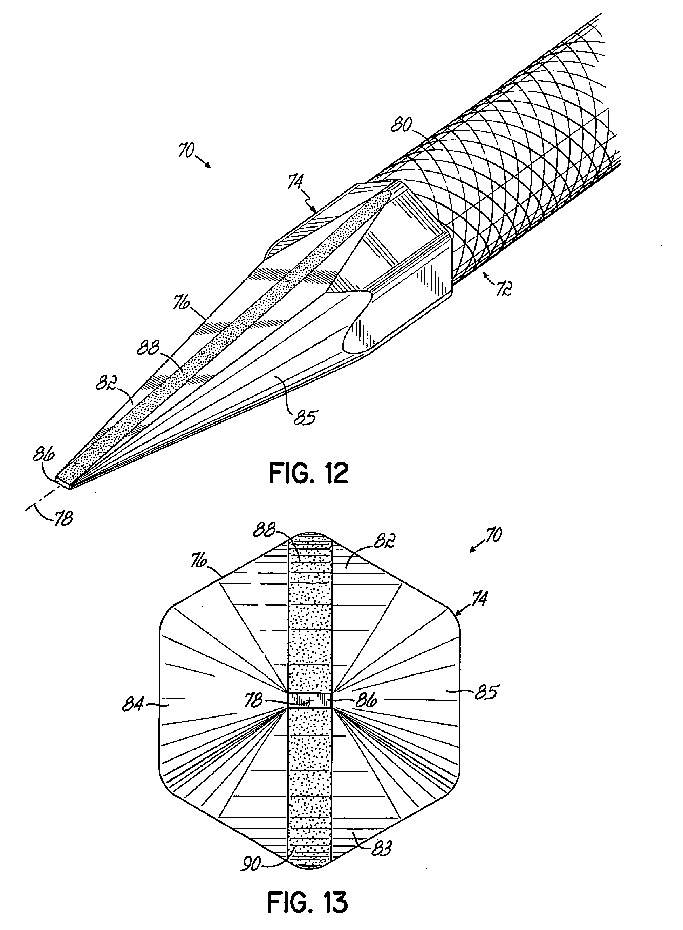

With reference to FIGS. 12-14 in which like reference numerals refer to like features in FIGS. 1-11 and in accordance with an alternative embodiment, an orthodontic hand tool, generally indicated by reference numeral 70, is shown that may be used to manipulate the movable member 25 of orthodontic bracket 20. The orthodontic hand tool 70 generally includes an elongate shaft or handle 72 with a proximal end (not shown) and a distal end 74, a tip 76 projecting from the distal end 74 of handle 72, and a longitudinal axis 78 extending along the handle 72 and tip 76. Orthodontic hand tool 70 may be constructed of conventional materials familiar to a person having ordinary skill in the art. The handle 72 may be grasped by a clinician and manipulated to maneuver the tip 76 for opening the movable member 25 of bracket 20. To assist the clinician in gripping the orthodontic hand tool 70, the handle 72 includes a textured region 80 formed in the otherwise smooth outer surface and extending about the circumference of the handle 72. In one embodiment, the textured region 80 is a knurled pattern containing interlaced grooves. The textured region 80 may be formed during a molding process forming the orthodontic hand tool 70, by machining the hand tool 70 after forming, or by other techniques understood by a person having ordinary skill in the art.

Tip 76 includes a pair of substantially planar or flat sidewalls 82, 83 that taper so as to converge at respective side edges bounding a planar end surface 86. Contoured sidewalls 84, 85, which are disposed between sidewalls 82 and 83, likewise converge toward the end surface 86 and define side edges of the end surface 86. The sidewalls 82-85 are symmetrically arranged about the longitudinal axis 78. The area and lengths of the side edges of the end surface 86 are selected such that the tip 76 can be partially inserted into the recess 40 defined in the bracket body 21. The depth of recess 40 and the penetration depth of the tip 76 into the recess 40 may each be between about 0.5 mm and about 2.0 mm. When so inserted and contingent upon the insertion depth, the end surface 86 may have either a contacting relationship or a proximate relationship with the base surface 47 of the recess 40. One of the sidewalls 82, 83 confronts the portion 27 of the movable member 25 and the other of the sidewalls 82, 83 confronts the sidewall 42 of the recess 40.

In the representative embodiment, the end surface 86 is substantially rectangular (i.e., a planar quadrilateral with opposite side edges of equal lengths and with four right angle corners). The end surface 86 of tip 76 may have other closed geometrical shapes, such as a quadrilateral, a trapezoid (a quadrilateral with two sides parallel), or a square (a rectangle in which all sides have equal length). In each of these alternative shapes, the side edges of the end surface 86 intersected by the substantially flat sidewalls 82, 83 are approximately linear.

Each of the sidewalls 82, 83 of tip 76 includes a respective contrast region 88, 90 created by a laser marking process that discolors the material constituting the orthodontic hand tool 70. Alternatively, the contrast regions 88, 90 may be formed by applying a colored coating to the sidewalls 82, 83. The contrast regions 88, 90 have a width that is significantly smaller than their length. The coloration of the contrast regions 88, 90 is chosen to promote visual perception by the human eye and to contrast with the other adjacent sidewalls 84, 85. This permits a clinician to readily identify the orientation of the sidewalls 82-85 of tip 76 so that the orthodontic hand tool 70 can be oriented to align the sidewalls 84, 85 with the short sides of the sidewall 42 bounding the recess 40. In this oriented condition, one of the sidewalls 82, 83 can be juxtaposed with portion 27 of the movable member 25 and the other of the sidewalls 82, 83 is proximate to the long side of the sidewall 42 bounding the recess 40. The length of the sidewalls 82, 83 may also be selected to promote their identification by the clinician when the hand tool 70 is used. In an alternative embodiment, the contrast regions 88, 90 may be omitted from the construction of the hand tool 70.

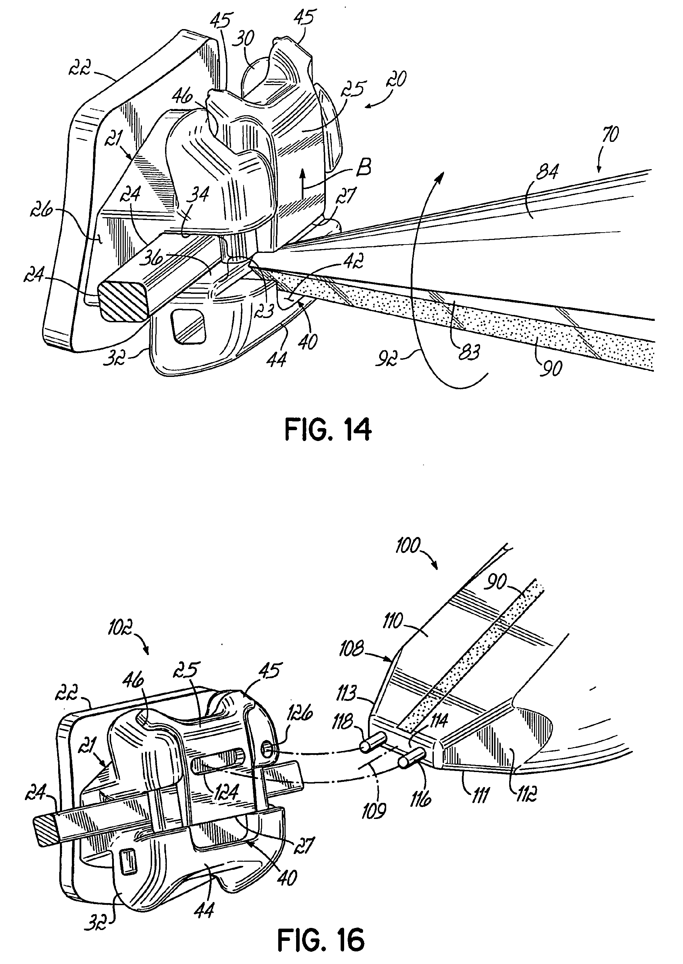

Orthodontic hand tool 70 is used in a manner similar to tool 10 (FIGS. 2-7). In use and with reference to FIGS. 12-14, the clinician grasps the handle 72 of orthodontic hand tool 70 with one or more fingertips contacting the textured region 80. After identifying the location of the flat sidewalls 82, 83 with the assistance of the visual queue provided by contrast regions 88, 90, the clinician orients the tip 76 so that one of the flat sidewalls 82, 83 will be juxtaposed with portion 27 of the movable member 25 and the other of the flat sidewalls 82, 83 will be proximate to the long side of the sidewall 42 bounding the recess 40. With this orientation established, the clinician maneuvers the handle 72 to insert the tip 76 into the recess 40 in bracket body 21, which is mounted to the patient's tooth (not shown). In the specific orientation shown in FIG. 14, flat sidewall 82 is adjacent to portion 27 of the movable member 25 and flat sidewall 83 is adjacent to the sidewall 42 of the recess 40.

The clinician then rotates the handle 72 about the longitudinal axis 78, which serves to rotate the tip 76 in a direction 92. As the tip 76 is rotated, sidewalls 82, 84 of the tip 76 contact portion 27 of the movable member 25 and sidewalls 83, 85 of the tip 76 contact the sidewall 42 of recess 40. This dual action transfers reactionary forces to the first and second contacts points and, thereby, substantially limits the force applied to the patient's tooth when the movable member 25 is opened. After the movable member 25 is opened, the clinician removes the tip 76 from the recess 40. The archwire 24 is then accessible for removal from the archwire slot 23.

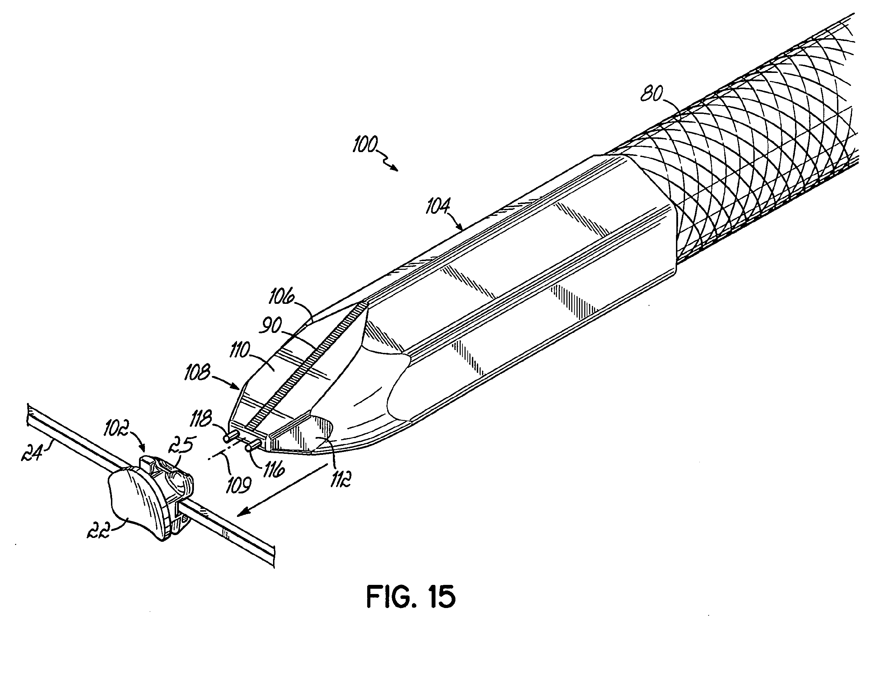

With references to FIGS. 15, 16, 17A and 17B in which like reference numerals refer to like features in FIGS. 1-14 and in accordance with an alternative embodiment of the invention, an orthodontic hand tool, generally indicated by reference numeral 100, is shown that may be used in conjunction with an orthodontic bracket 102. Orthodontic hand tool 100 is used in a manner similar to tools 10 (FIGS. 2-7) and 70 (FIGS. 12-14) to move the movable member relative to the bracket body for the purpose of opening the movable member of the orthodontic bracket.

The orthodontic hand tool 100 generally includes an elongate shaft or handle 104 with a proximal end (not shown) and a distal end 106, a tip 108 that projects from the distal end 106, and a longitudinal axis 109 extending along the handle 104 and tip 108. Orthodontic hand tool 100 may be constructed of conventional materials familiar to a person having ordinary skill in the art.

Tip 108 includes sidewalls 110-113 that taper so as to converge at respective side edges bounding a planar end surface 114. Sidewalls 110, 111 may include contrast regions 88, 90 (FIGS. 12-14), of which contrast region 90 is visible on sidewall 110. These sidewalls 110, 111 are also longer and wider than the sidewalls 112, 113 to promote their identification by the clinician when the tool 100 is used.

The tip 108 includes a pair of projections or prongs 116, 118 that project outwardly from end surface 114. A centerline of each of the prongs 116, 118 is approximately perpendicular to a plane containing the end surface 114. The prongs 116, 118 may project between about 0.5 mm and about 2.0 mm from the plane containing the end surface 114. The prongs 116, 118, which are positioned in a flanking relationship on opposite sides of the longitudinal axis 109, are spaced apart from each other by a gap. As the handle 104 is rotated about the longitudinal axis 109, the prongs 116, 118 rotate in respective circular orbits about the longitudinal axis 109.

The orthodontic hand tool 100 is used to manipulate the movable member 25 of the orthodontic bracket 102. As best shown in FIG. 16, the orthodontic bracket 102 is similar in construction to orthodontic bracket 20 (FIGS. 3, 3A, 4) and further includes a slot 124 in the movable member 25 and a recess 126 in the bracket body 21. In the representative embodiment, the slot 124 has an oval shape and the recess 126 is round. When the movable member 25 is in the closed position, the recess 126 is generally aligned with the major dimension of the slot 124 and the slot 124 is disposed on the same side of the archwire slot 23 as the recess 126. The minor dimension of the slot 124 is slightly larger than the diameter of prong 116 and the diameter of the recess 126 is slightly larger than the diameter of prong 118. This clearance permits the slot 124 to receive prong 116 and the recess 126 to receive prong 118.

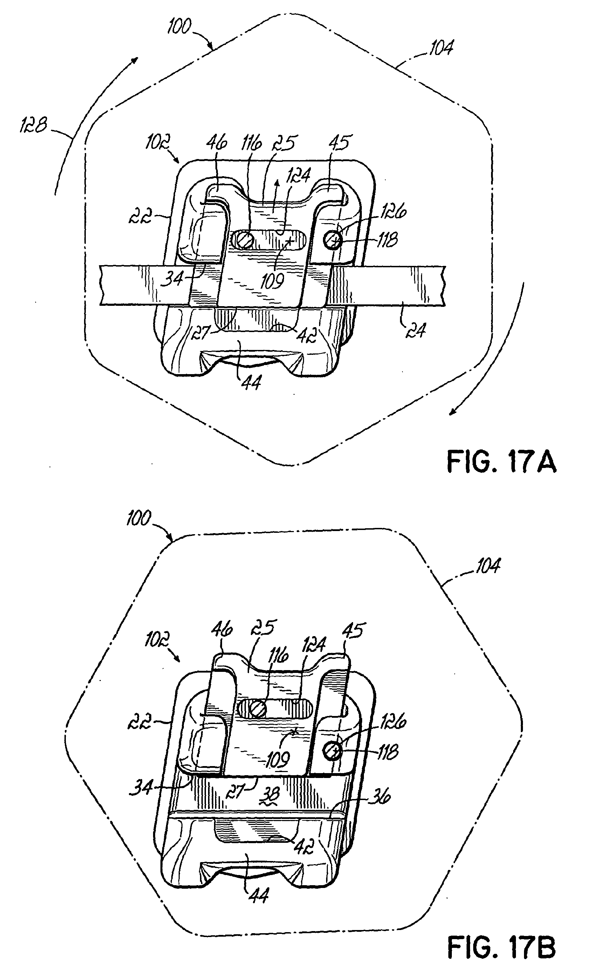

Orthodontic hand tool 100 is used in a manner similar to tools 10 (FIGS. 2-7) and 70 (FIGS. 12-14) to move the movable member relative to the bracket body for the purpose of opening the movable member of the orthodontic bracket. In use and with reference to FIGS. 17A and 17B, the clinician grasps the handle 104 of orthodontic hand tool 100 with one or more fingertips contacting the textured region 80. After identifying the location of the flat sidewalls 110, 111, the clinician orients the tip 108 so that the prongs 116, 118 can be inserted into the slot 124 and recess 126, respectively. With this orientation established, the clinician maneuvers the handle 104 to insert prong 116 into slot 124 and prong 118 into recess 126 in bracket body 21, which is mounted to the patient's tooth (not shown). The clinician then rotates the handle 104 about the longitudinal axis 109, which serves to rotate the tip 108 in a direction 128.

As the tip 108 is rotated, prong 116 is confined in recess 126 and prong 118 is free to move within the slot 124. Prong 118 applies a force against the sidewall of the slot 124 that urges the movable member 25 from the closed position toward the opened position. Prong 116, which remains confined within recess 126, applies a counter-balancing force to the bracket body 21. After the movable member 25 is opened, the clinician removes the prongs 116, 118 from the slot 124 and recess 126. The archwire 24 is then accessible for removal from the archwire slot 23.

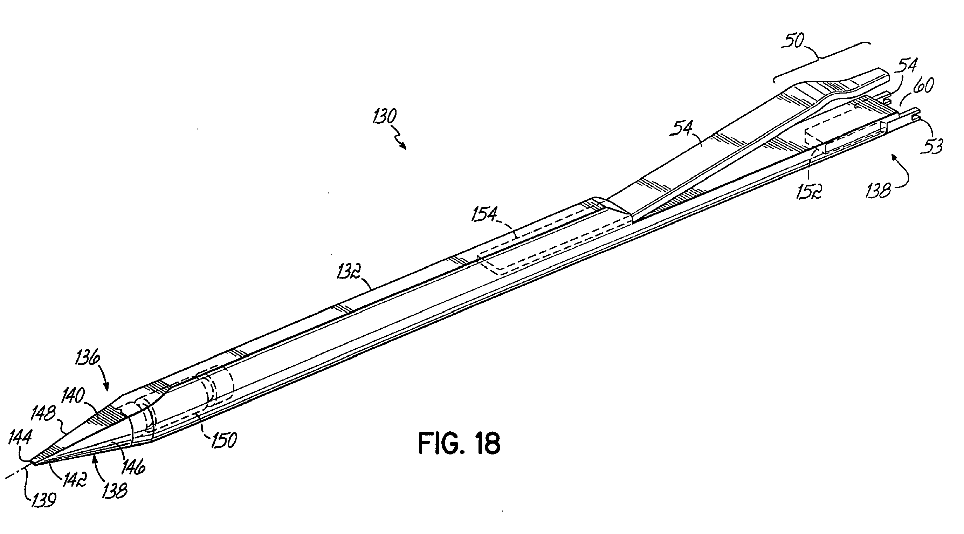

With references to FIG. 18 in which like reference numerals refer to like features in FIGS. 1-17 and in accordance with an alternative embodiment, an orthodontic hand tool, generally indicated by reference numeral 130, is shown that may be used in conjunction with the orthodontic bracket 20 and, more specifically, used to manipulate the movable member 25 of orthodontic bracket 20. The orthodontic hand tool 130, which is similar to hand tool 70 (FIGS. 12-14), generally includes an elongate shaft or handle 132 with a proximal end 134, a distal end 136, and a tip 138 that projects from the distal end 136. A longitudinal axis 139 extends along the handle 132 and tip 138 between the proximal end 134 and distal end 136.

Tip 138 includes a pair of substantially planar or flat sidewalls 140, 142, which are similar to sidewalls 82, 83 (FIGS. 12, 13), that taper so as to converge at respective side edges bounding a planar end surface 144, which is similar to end surface 86 (FIGS. 12, 13). Contoured sidewalls 146, 148, which are disposed between sidewalls 140, 142, likewise converge toward the end surface 144 and define side edges of the end surface 144. The sidewalls 140, 142, 146, 148 are symmetrically arranged about the longitudinal axis 139. The area and lengths of the side edges of the end surface 144 are selected such that the tip 138 can be partially inserted into the recess 40 defined in the bracket body 21. The depth of recess 40 and the penetration depth of the tip 138 into the recess 40 may each be between about 0.5 mm and about 2.0 mm. When so inserted and contingent upon the insertion depth, the end surface 144 may have either a contacting relationship or a proximate relationship with the base surface 47 of the recess 40. One of the sidewalls 140, 142 confronts the portion 27 of the movable member 25 and the other of the sidewalls 140, 142 confronts the sidewall 42 of the recess 40.

The proximal end 134 of the handle 132 includes the closing mechanism 50 (FIGS. 11, 11A) so that orthodontic hand tool 130 is also a dual-purpose tool. However, this embodiment is not so limited and may include a non-functional proximal end.

Orthodontic hand tool 130 has a composite construction consisting of inserts or posts carrying the functional features that are disposed inside the material forming the handle 132, wherein the inserts and handle are composed of different types of materials. For example, the handle 132 may be formed from a cured polymer resin the tip 138 and the closing mechanism 50 may be formed from a metal and partially embedded in the cured polymer resin. In this instance, the tip 138 and the first and second sections 51, 54 of the closing mechanism 50 are coupled with respective posts 150, 152, 154, which are anchored within the polymer material of the handle 132. The posts 150, 152, 154 are concealed inside of the handle 132. The orthodontic hand tool 130 may be formed, for example, by an injection molding process with the tip 138 and the first and second sections 51, 54 of the closing mechanism 50 inserted into the mold before molten polymer injection. Because of its composite construction, the weight of the orthodontic hand tool 130 may be reduced in comparison to an all-metal construction.

Sidewalls 140, 142, which are flat, extend along the handle the handle 132 of the tool 130. The flat edges defined by the sidewalls 140, 142 on the handle 132 provide a tactile and visual indicator on the orientation of the tool tip 138, which improves the ease of use for the clinician.

While the invention has been illustrated by a description of various preferred embodiments and while these embodiments have been described in considerable detail in order to describe the best mode of practicing the invention, additional advantages and modifications within the spirit and scope of the invention will readily appear to those skilled in the art.

## Claims

1. An orthodontic system comprising an orthodontic hand tool for use with a self-ligating orthodontic bracket, the orthodontic bracket including a bracket body configured to be mounted to a tooth and a movable member, the bracket body having a first contact point and the movable member having a second contact point, the orthodontic hand tool comprising an elongate shaft and a tip projecting from the elongate shaft, the tip including a first portion configured to be placed in a contacting relationship with the first contact point on the bracket body and a second portion configured to be placed in a contacting relationship with the second contact point on the movable member, the first portion of the tip applying a first force to the first contact point when the elongate shaft is tilted or rotated relative to the bracket body, and the second portion of the tip applying a second force to the second contact point, when the elongate shaft is tilted or rotated relative to the bracket body, effective to move the movable member relative to the bracket body.

2. The orthodontic system of claim 1 wherein the elongate shaft has a longitudinal axis, and the tip has an axis of symmetry that is offset radially from the longitudinal axis of the elongate shaft.

3. The orthodontic system of either claim 1 or claim 2 wherein the tip includes a plurality of sidewalls, one of the sidewalls is positioned to have the contacting relationship with the first contact point on the bracket body, and another of the sidewalls is positioned to have the contacting relationship with the second contact point on the movable member.

4. The orthodontic system of any preceding claim wherein when the elongate shaft is tilted or rotated, the tip is configured to move the movable member relative to the bracket body from a closed position in which the movable member retains the archwire in the archwire slot toward an open position in which the archwire is insertable into the archwire slot.

5. The orthodontic system of any preceding claim wherein the elongate shaft includes a longitudinal axis, the first portion of the tip is a first projection, and the second portion of the tip is a second projection disposed adjacent to the first projection, the first and second projections located on opposite sides of the longitudinal axis.

6. The orthodontic system of any preceding claim wherein the tip includes a region that visually contrasts with another region on the tip such that the first and second portions can be placed in an oriented relationship relative to the first and second contact points.

7. The orthodontic system of any preceding claim wherein the handle is formed from a cured polymer resin and the tip is formed from a metal, the tip having a portion that is embedded in the cured polymer resin to anchor the tip with the handle.

8. The orthodontic system of any preceding claim wherein the elongate shaft has a first end and a second end from which the tip projects, and the hand tool further comprises a closing mechanism projecting from the second end of the elongate shaft, the second tip adapted to engage an archwire and to apply a force to the movable member effective to hold the archwire in an archwire slot of the bracket body and to concurrently move the movable member relative to the bracket body.

9. An orthodontic system comprising an orthodontic bracket for use with an orthodontic hand tool having a tip, the orthodontic bracket adapted to couple an archwire with a tooth, the orthodontic bracket comprising a bracket body configured to be mounted to a tooth, the bracket body including an archwire slot and a first contact point, and a movable member coupled with the bracket body for movement relative to the archwire slot between an open position in which the archwire is insertable into the archwire slot and a closed position in which the movable member retains the archwire in the archwire slot, the movable member including a second contact point, wherein the first contact point is positioned on the bracket body such that a first portion of the tip of the orthodontic hand tool can be placed in a contacting relationship with the first contact point on the bracket body and a first portion of the tip of the orthodontic hand tool can be placed in a contacting relationship with the second contact point on the movable member.

10. An orthodontic system for use in coupling an archwire with a tooth, the orthodontic system comprising an orthodontic hand tool having an elongate shaft and a tip projecting from the elongate shaft, and an orthodontic bracket configured to be mounted to the tooth, the orthodontic bracket including a bracket body with an archwire slot and a movable member coupled with the bracket body for movement relative to the archwire slot between an open position in which the archwire is insertable into the archwire slot and a closed position in which the movable member retains the archwire in the archwire slot, the bracket body including a first contact point, and the movable member including a second contact point, the first contact point positioned on the bracket body such that the tip of the orthodontic hand tool can be placed in a contacting relationship with the first contact point on the bracket body and a contacting relationship with the second contact point on the movable member, wherein, when the elongate shaft is tilted or rotated relative to the bracket body, a first portion of the tip applies a first force to the first contact point on the bracket body and a second portion of the tip applies a second force to the second contact point on the movable member effective to move the movable member relative to the bracket body.

11. An orthodontic system comprising the hand tool of any one of claims 1 to 8 and the bracket of claim 9.

12. The orthodontic system of either claim 10 or claim 11 wherein the first contact point is a recess, and the tip is coupled with the recess so that the tip has the contacting relationship with a portion of the bracket body bounding the recess.

13. The orthodontic system of any one of claims 10 to 12 wherein the tip includes a plurality of sidewalls, one of sidewalls is positioned relative to the recess to contact the first contact point on the bracket body, and another of the sidewalls is positioned to contact the second contact point on the movable member.

14. The orthodontic system of any one of claims 9 to 13 wherein the bracket body includes a labial surface, the archwire slot is in the labial surface, and the first contact point is positioned on the labial surface of the bracket body.

15. The orthodontic system of claim 14 wherein the first contact point has a non-coplanar relationship with an adjacent portion of the labial surface.

16. The orthodontic bracket system of any one of claims 9 to 15 wherein the first contact point is a recess which is bounded by a sidewall extending into the bracket body.

17. The orthodontic bracket system of claim 16 wherein the second contact point is a side edge of the movable member or an oval slot defined in the movable member.

18. An orthodontic hand tool for use in conjunction with a self-ligating orthodontic bracket, the orthodontic hand tool comprising an elongate shaft extending between a first end and a second end, a first member on the first end that is structurally configured to perform a first function associated with the self-ligating bracket, and a second member on the second end that is structurally configured to perform a second function different than the first function.

19. The orthodontic hand tool of claim 18 wherein the first function is either activating a movable member of the self-ligating bracket to capture an archwire in an archwire slot of the self-ligating bracket, or de-activating the movable member of the self-ligating bracket so that the archwire can be removed from the archwire slot of the self-ligating bracket.

20. The orthodontic hand tool of claim 19 wherein the second function is either activating the movable member of the self-ligating bracket to capture the archwire in the archwire slot of the self-ligating bracket, or de-activating the movable member of the self-ligating bracket so that the archwire can be removed from the archwire slot of the self-ligating bracket.
